# EUROPÄISCHE PATENTSCHRIFT

(11) **EP 3 300 584 B1**
(45) Veröffentlichungstag und Bekanntmachung des Hinweises auf die Patenterteilung: **15.07.2020**
(21) Anmeldenummer: 17185575.2
(22) Anmeldetag: 09.08.2017
(51) Int. Cl.: A01D 69/02, B60W 10/06, B60W 10/08, B60W 10/30, B60W 20/10, B60W 20/13, B60W 30/188

(54) **LANDWIRTSCHAFTLICHE ARBEITSMASCHINE UND VERFAHREN ZUM BETRIEB EINER LANDWIRTSCHAFTLICHEN ARBEITSMASCHINE**
AGRICULTURAL MACHINE AND METHOD FOR OPERATING AN AGRICULTURAL MACHINE
ENGIN AGRICOLE ET PROCÉDÉ DE FONCTIONNEMENT D'UN ENGIN AGRICOLE

(30) Priorität: 30.09.2016 DE 102016118566
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Fischer, Frédéric, 59823 Arnsberg (DE); Kriebel, Bastian, 48155 Münster (DE); Kettelhoit, Boris, 33335 Gütersloh (DE); Sprigade, Daniel, 59427 Unna (DE); Heymann, Philipp, 59519 Möhnesee Wamel (DE)
(74) Vertreter: CLAAS Gruppe

(56) Entgegenhaltungen:
- EP-A1- 1 563 724
- EP-A1- 3 257 353
- DE-A1-102007 019 156
- KR-A- 20160 042 139
- US-A1- 2014 283 492

## Beschreibung

Die vorliegende Erfindung betrifft eine landwirtschaftliche Arbeitsmaschine gemäß dem Oberbegriff von Anspruch 1 und ein Verfahren zum Betrieb einer landwirtschaftlichen Arbeitsmaschine gemäß dem Oberbegriff von Anspruch 10.

Unter einer landwirtschaftlichen Arbeitsmaschine wird jegliche Form von Arbeitsfahrzeug verstanden, das insbesondere mit einem eigenen Fahrantrieb (Antriebsachse mit Antriebsrädern) versehen ist, aber alternativ auch als Fahrzeug ohne eigenen Antrieb, beispielsweise als Hänger, ausgebildet sein kann. Nur beispielhaft erwähnt seien als landwirtschaftliche Arbeitsmaschinen Mähdrescher, Feldhäcksler oder Schlepper mit Anbauten wie Düngerstreuer, Sämaschinen, Spritzeinrichtungen, Wender, Schwader o. dgl..

Auf dem technischen Gebiet der Landwirtschaft ist es bekannt, verschiedene Abläufe einer landwirtschaftlichen Arbeitsmaschine automatisiert oder teilautomatisiert ablaufen zu lassen, darunter unter anderem den Betrieb und die Steuerung eines Großteils der Arbeitsaggregate der Arbeitsmaschine. Unter einem Arbeitsaggregat wird insbesondere eine landwirtschaftliche Arbeit unterstützende oder verrichtende und dadurch Leistung verbrauchende Komponente der Arbeitsmaschine verstanden. Neben den vorgenannten Anbauten sind dies beispielsweise Haspel, Schneidwerk, Dreschwerk, Fördereinrichtungen (Förderschnecke oder -band), Hubwerke (Front- oder Heckhubwerk) o. dgl..

Während der Fahrt eines Mähdreschers durch den Feldbestand wird beispielsweise dessen Haspel und Schneidwerk betrieben. Außerdem wird das Schnittgut über Förderschnecken und -bänder durch einen Einzugskanal transportiert, wobei das Schnittgut auch ein Dreschwerk durchläuft. Die einzelnen Komponenten werden im Bedarfsfall automatisch zugeschaltet oder getrennt. Beispielsweise ist denkbar, dass, wenn ein Mähdrescher in einen Feldbestand hineinfährt, ein Fronthubwerk mit daran angeordneter Haspel und Schneidwerk abgesenkt wird und Haspel, Schneidwerk, Förderschnecken und -bänder sowie Dreschwerk eingeschaltet werden. Beim Ausfahren aus dem Feldbestand oder bei einer Wende ist es wiederum denkbar, dass Haspel, Schneidwerk, Förderschnecken und -bänder sowie Dreschwerk ausgeschaltet und das Fronthubwerk mit daran angeordneter Haspel und Schneidwerk angehoben wird.

Die in Rede stehenden landwirtschaftlichen Arbeitsmaschinen weisen üblicherweise eine Verbrennungskraftmaschine, insbesondere einen Dieselmotor, als gemeinsamen Antrieb für die Arbeitsaggregate und den Fahrantrieb auf. Als einziger Energiespeicher dient der Verbrennungskraftmaschine ein Kraftstofftank.

Es sind auch Arbeitsmaschinen bekannt (EP 1 563 724 A1), die neben einer als Hauptmaschine betriebenen Verbrennungskraftmaschine noch eine separate Hilfskraftmaschine in Form einer Elektromaschine aufweisen. Diese dient in der Regel ausschließlich dazu, dass der Fahrer der landwirtschaftlichen Arbeitsmaschine im Bedarfsfall die Systemleistung kurzzeitig um die Leistungsfähigkeit der Elektromaschine steigern kann (sogenannter Boost-Betrieb).

Aus dem Stand der Technik in KR-10-2016-0042139 ist eine landwirtschaftliche Arbeitsmaschine bekannt, deren Fahrerassistenzsystem die Fahrgeschwindigkeit der Maschine in Abhängigkeit von Last an der Verbrennungskraftmaschine, elektrischer Hilfskraftmaschine und dem Ladezustand des elektrischen Energiespeichers regelt.

Aus einem Stand der Technik nach Art. 54(3) EPÜ (EP 3 257 353 A1) ist auch ein Hybridsystem bekannt, bei dem eine elektrische Hilfskraftmaschine Lastschwankungen bedingt durch Unterschiede in der Bestandsdichte ausgleicht. Bei einem plötzlichen Lastanstieg aufgrund einer Erhöhung der Dichte des Erntegutbestands stellt die elektrische Hilfskraftmaschine sofort zusätzliche Leistung zur Verfügung, wodurch die Drehzahl an der Abtriebswelle der Verbrennungskraftmaschine weitestgehend konstant gehalten wird.

Unabhängig davon ist aus der DE 10 2004 059 543 A1 eine selbstfahrende landwirtschaftliche Arbeitsmaschine bekannt, bei der die Fahrgeschwindigkeit der Arbeitsmaschine mittels eines Fahrerassistenzsystems, auch Cruise Pilot genannt, in Abhängigkeit von unterschiedlichen Betriebssituationen nach unterschiedlichen Prozessführungsstrategien geregelt wird. Beispielsweise wird die Fahrgeschwindigkeit gemäß einer Prozessführungsstrategie so gewählt, dass der Durchsatz maximal ist. Bei relativ dünnen Erntegutbeständen, bei der die Durchsatzmenge abnimmt, wird dann die Fahrgeschwindigkeit vom Fahrerassistenzsystem erhöht. Bei relativ dichten Erntegutbeständen, bei der die Durchsatzmenge ansteigt, wird die Fahrgeschwindigkeit vom Fahrerassistenzsystem entsprechend verringert.

Die Reaktion des Fahrerassistenzsystems erfolgt aufgrund der Komplexität des Ernteprozesses immer zeitverzögert. Registriert das Fahrerassistenzsystem beispielsweise einen Einbruch der Drehzahl an der Abtriebswelle der Verbrennungskraftmaschine bedingt durch eine bestimmte Menge an Schnittgut im Dreschwerk, kann sich bereits ein noch größerer Anteil an Schnittgut im vorangehenden Abschnitt des Einzugskanals befinden, der noch verarbeitet werden muss. Daher wird stets eine gewisse Leistungsreserve vorgehalten, um kritische Situationen wie ein "Absterben" der Verbrennungskraftmaschine bei Überlastung zu vermeiden.

Wird in einer landwirtschaftlichen Arbeitsmaschine sowohl ein solches Fahrerassistenzsystem als auch ein wie zuvor beschriebenes Hybridsystem vorgesehen, kann das Fahrerassistenzsystem eine größere Fahrgeschwindigkeit und dadurch auch mehr Durchsatz bewirken als ohne Hybridsystem. Der Grund hierfür ist, dass das Hybridsystem mit seinem Energiespeicher eine Leistungsreserve zur Verfügung stellt, auf die das Fahrerassistenzsystem zurückgreifen kann, wenn es wie beschrieben einen Einbruch der Drehzahl an der Abtriebswelle der Verbrennungskraftmaschine registriert und noch eine unerwartet große Menge an sich im Einzugskanal befindlichem Schnittgut verarbeitet werden muss. Für das Fahrerassistenzsystem muss dadurch keine eigene Leistungsreserve mehr vorgehalten werden oder die Leistungsreserve für das Fahrerassistenzsystem kann zumindest erheblich verringert werden, wodurch dem Fahrerassistenzsystem entsprechend mehr Leistung der Verbrennungskraftmaschine zur Verfügung steht.

Problematisch ist dabei allerdings, dass das Fahrerassistenzsystem bzw. dessen Regeleinrichtung den Fahrantrieb ausschließlich unter Berücksichtigung der von der Verbrennungskraftmaschine abgegebenen Leistung, also deren Auslastung, regelt. Da aber aufgrund der Unterstützung durch die Hilfskraftmaschine die Auslastung der Verbrennungskraftmaschine auch bei einem ansteigenden Leistungsbedarf der Arbeitsaggregate im Wesentlichen konstant bleibt, verringert das Fahrerassistenzsystem, das keine erhöhte Auslastung registriert, daraufhin auch nicht die Fahrgeschwindigkeit. Die Folge ist, dass der elektrisehe Energiespeicher des Hybridsystems entladen wird. Ist dieser vollständig entladen, entfällt schlagartig die Unterstützung der Verbrennungskraftmaschine durch das Hybridsystem, was wiederum zu einem schlagartigen Anstieg der Auslastung der Verbrennungskraftmaschine führen kann (wenn zu diesem Zeitpunkt ein erhöhter Leistungsbedarf der Arbeitsaggregate vorliegt). Daraufhin wird das Fahrerassistenzsystem die Fahrgeschwindigkeit und damit den Durchsatz reduzieren, dies aber sehr plötzlich und sehr stark, damit anschließend der Energiespeicher wieder aufgeladen werden kann.

Solche unvermittelten Geschwindigkeitsänderungen können vom Fahrer als unangenehm empfunden werden. Zudem besteht das Risiko, dass keine ausreichende Leistungsreserve mehr in dem Fall zur Verfügung steht, wenn noch eine unerwartet große Menge an Schnittgut verarbeitet werden muss, die sich bereits im Einzugskanal befindet. Dies kann sich negativ auf den Kraftstoffverbrauch und die Schadstoffemissionen, aber auch auf den Ernteprozess auswirken. Unter Umständen geht der Motor sogar aus ("stirbt ab") und muss, nachdem die Arbeitsaggregate wieder in einen gangbaren Zustand gebracht worden sind, neu gestartet werden.

Der Erfindung liegt das Problem zugrunde, die bekannte Arbeitsmaschine dahingehend weiterzubilden, dass vom Fahrerassistenzsystem verursachte plötzliche und erhebliche Änderungen der Fahrgeschwindigkeit vermieden werden.

Das obige Problem wird gemäß einer ersten Lehre der Erfindung bei einer landwirtschaftlichen Arbeitsmaschine gemäß dem Oberbegriff von Anspruch 1 durch die Merkmale des kennzeichnenden Teils von Anspruch 1 gelöst.

Die landwirtschaftliche Arbeitsmaschine, bei der es sich insbesondere um eine Erntemaschine wie einen Mähdrescher oder Feldhäcksler handelt, weist einen Leistungsverbraucher in Form eines Fahrantriebs und mindestens einen weiteren Leistungsverbraucher, beispielsweise mindestens ein Arbeitsaggregat, auf. Ferner verfügt die Arbeitsmaschine über ein Energiebereitstellungssystem, das als Energiebereitstellungskomponenten neben einer Verbrennungskraftmaschine auch eine speziell angesteuerte elektrische Hilfskraftmaschine und einen elektrischen Energiespeicher sowie insbesondere den Energiebereitstellungskomponenten jeweils zugeordnete Steuergeräte aufweist. Die insbesondere rotatorische Verbrennungskraftmaschine bildet beispielsweise eine Hauptmaschine der landwirtschaftlichen Arbeitsmaschine, also einen im Betrieb der Arbeitsmaschine ständig Leistung abgebenden Antrieb, und die insbesondere ebenfalls rotatorische Hilfskraftmaschine einen im Betrieb der Arbeitsmaschine nur vorübergehend im Bedarfsfall Leistung abgebenden Antrieb. Zudem verfügt die Arbeitsmaschine über ein Fahrerassistenzsystem mit einer Regeleinrichtung, die konfiguriert ist, eine Regelung der Verbrennungskraftmaschine, der Hilfskraftmaschine und des Fahrantriebs durchzuführen.

Vorschlagsgemäß regelt die Regeleinrichtung des Fahrerassistenzsystems, die auch als Vorfahrtregler bezeichnet wird, den Fahrantrieb unter Berücksichtigung der von dem Energiebereitstellungssystem insgesamt abgebbaren Energie derart, dass die Drehzahl an einer Abtriebswelle der Verbrennungskraftmaschine bei variierendem Leistungsbedarf des mindestens einen weiteren Leistungsverbrauchers auf einem konstanten Wert oder in einem konstanten Wertebereich gehalten wird. Dabei regelt die Regeleinrichtung des Fahrerassistenzsystems den Fahrantrieb auf eine maximale Fahrgeschwindigkeit der Arbeitsmaschine.

Mit der von dem Energiebereitstellungssystem insgesamt abgebbaren Energie ist die Summe aus der im Kraftstofftank der Verbrennungskraftmaschine und der im elektrischen Energiespeicher gespeicherten Energie gemeint. Bevor die Energiemenge in einer der beiden Speichereinrichtungen (Kraftstofftank oder Energiespeicher) soweit abnimmt, dass zu erwarten ist, dass im Falle eines erhöhten Leistungsbedarfs der Arbeitsaggregate nicht mehr genügend Leistung zur Verfügung gestellt werden kann, wird durch die Regeleinrichtung des Fahrerassistenzsystems die Fahrgeschwindigkeit verringert. Dadurch wird der Durchsatz verringert und werden Leistungsreserven freigesetzt. Da der elektrische Energiespeicher ungleich schneller gelehrt wird als der Kraftstofftank einer üblichen Arbeitsmaschine, wird von dem Energiebereitstellungssystem der Ladezustand des Energiespeichers berücksichtigt (überwacht) und ein vollständiges Entleeren des elektrischen Energiespeichers verhindert, was im Weiteren noch näher erläutert wird.

Anders ausgedrückt legt die Regeleinrichtung des Fahrerassistenzsystems der genannten Regelung also die Auslastung des gesamten Energiebereitstellungssystems, das neben der Verbrennungskraftmaschine zumindest auch die Hilfskraftmaschine und den damit verbundenen elektrischen Energiespeicher umfasst, zugrunde. Der Regeleinrichtung stehen als Eingangsgrößen für die Regelung insbesondere zumindest die abgegebene Leistung oder vorhandene Leistungsreserve der Verbrennungskraftmaschine und andererseits die abgegebene Leistung oder vorhandene Leistungsreserve der Hilfskraftmaschine zur Verfügung. Mit der abgegebenen Leistung oder vorhandenen Leistungsreserve ist immer die momentan abgegebene Leistung oder momentan vorhandene Leistungsreserve zum Zeitpunkt der Messung von Leistung bzw. Leistungsreserve gemeint. Die Regeleinrichtung des Fahrerassistenzsystems führt die Regelung des Fahrantriebs zusätzlich unter weiterer Berücksichtigung des Ladezustands des elektrischen Energiespeichers durch, gegebenenfalls auch unter weiterer Berücksichtigung des Füllstands des Kraftstofftanks, wobei Ladezustand und Füllstand ebenfalls Eingangsgrößen der Regeleinrichtung sind.

Da wie eingangs erläutert aufgrund der Unterstützung durch die Hilfskraftmaschine eine im Wesentlichen gleichbleibende Auslastung der Verbrennungskraftmaschine auch bei einem ansteigenden Leistungsbedarf der Arbeitsaggregate ermöglicht wird, kann das Fahrerassistenzsystem, beispielsweise über mindestens einen Drehzahl- und/oder Drehmomentsensor an der Abtriebswelle, zwar keine nennenswerten Änderungen der abgegebenen Leistung der Verbrennungskraftmaschine erkennen, wohl aber deutliche Änderungen der abgegebenen Leistung des gesamten Energiebereitstellungssystems und insbesondere Änderungen des Ladezustands des Energiespeichers. So kann beispielsweise mittels mindestens eines Drehzahl- und/oder Drehmomentsensors, der insbesondere an einer Abtriebswelle der Hilfskraftmaschine angeordnet ist, ein Anstieg der abgegebenen Leistung der Hilfskraftmaschine ermittelt werden (Anspruch 2), obwohl die abgegebene Leistung der Verbrennungskraftmaschine im Wesentlichen konstant bleibt. Zusätzlich oder alternativ kann ein Anstieg der abgegebenen Leistung der Hilfskraftmaschine auch über die Erfassung des Ladezustands des Energiespeichers ermittelt werden (Anspruch 3). Ein sinkender Ladezustand deutet dabei auf eine erhöhte Leistungsabgabe der Hilfskraftmaschine hin.

Sobald das Fahrerassistenzsystem einen Anstieg der abgegebenen Leistung der Hilfskraftmaschine und/oder eine Verringerung des Ladezustands des Energiespeichers, insbesondere um einen bestimmten Wert, ermittelt, wird die Fahrgeschwindigkeit der Arbeitsmaschine verringert. Dabei wird die Fahrgeschwindigkeit insbesondere soweit abgesenkt, dass der Energiespeicher wieder aufgeladen werden kann. Das vorschlagsgemäß verwendete Fahrerassistenzsystem reagiert also nicht erst dann, wenn der elektrische Energiespeicher vollständig entladen ist, sondern schon vorher, indem es nämlich ständig die von dem Energiebereitstellungssystem insgesamt abgebbare Energie bzw. die gesamten Energiereserven berücksichtigt und überwacht. Durch ein solchermaßen vorausschauendes Energiemanagement wird ein plötzlicher Leistungseinbruch aufgrund eines leeren Energiespeichers vermieden, was auch plötzliche Fahrgeschwindigkeitsanpassungen vermeidet.

Es sei darauf hingewiesen, dass zwar vorangehend immer auf den Fall eines ansteigenden Leistungsbedarfs der Arbeitsaggregate und entsprechend eines Anstiegs der abgegebenen Leistung des gesamten Energiebereitstellungssystems und insbesondere der Hilfskraftmaschine Bezug genommen wird. Dasselbe Prinzip ist aber auch umgekehrt auf den Fall eines sinkenden Leistungsbedarfs der Arbeitsaggregate und entsprechend eines Abfalls der abgegebenen Leistung des gesamten Energiebereitstellungssystems und insbesondere der Hilfskraftmaschine anwendbar. Sobald das Fahrerassistenzsystem also einen Abfall der abgegebenen Leistung der Hilfskraftmaschine und/oder eine Erhöhung des Ladezustands des Energiespeichers, insbesondere um einen bestimmten Wert, ermittelt, wird die Fahrgeschwindigkeit der Arbeitsmaschine erhöht.

Gemäß der Ausgestaltung nach Anspruch 4 ist vorgesehen, dass die Regeleinrichtung des Fahrerassistenzsystems die Fahrgeschwindigkeit der Arbeitsmaschine verringert, sobald der Ladezustand des Energiespeichers einen ersten (unteren) Sollwert unterschreitet. Auf diese Weise wird rechtzeitig einer vollständigen Entleerung des Energiespeichers entgegengewirkt. Zusätzlich oder alternativ kann die Fahrgeschwindigkeit der Arbeitsmaschine erhöht werden, sobald der Ladezustand des Energiespeichers einen zweiten (oberen) Sollwert überschreitet. Auf diese Weise wird die Fahrgeschwindigkeit immer möglichst früh erhöht, was zu einer Effizienzsteigerung beiträgt.

Wie bereits angedeutet, soll die Drehzahl an der Abtriebswelle der Verbrennungskraftmaschine trotz variierendem Leistungsbedarf des mindestens einen weiteren Leistungsverbrauchers möglichst auf einem konstanten Wert gehalten werden, wodurch der Kraftstoffverbrauch optimiert und Schadstoffemissionen verringert werden können. Zu diesem Zweck regelt eine weitere Regeleinrichtung, die insbesondere von der Regeleinrichtung des Fahrerassistenzsystems unabhängig ist, oder die Regeleinrichtung des Fahrerassistenzsystems die Hilfskraftmaschine so, dass die Hilfskraftmaschine einer lastwechselbedingten Änderung der Drehzahl an der Abtriebswelle der Verbrennungskraftmaschine entgegenwirkt (Anspruch 5).

Die Hilfskraftmaschine, die indirekt, insbesondere über ein Getriebe und/oder einen Riemen, oder direkt mit der Verbrennungskraftmaschine verbunden sein kann, ist insbesondere Bestandteil eines Hybridsystems, wobei die Hilfskraftmaschine vorzugsweise als elektrischer Generator betreibbar ist (Anspruch 6). Der Energiespeicher ist beispielsweise ein chemischer, elektrischer oder elektro-mechanischer Energiespeicher und ist bevorzugt nicht mit dem Bordnetz der Arbeitsmaschine verbunden. Durch ein solches Hybridsystem kann, wenn der Leistungsbedarf des mindestens einen Leistungsverbrauchers relativ gering ist, der Energiespeicher automatisch wieder aufgeladen werden. Besonders bevorzugt ist die jeweilige Regeleinrichtung, also entweder die weitere Regeleinrichtung oder die des Fahrerassistenzsystems, derart konfiguriert, dass sie die Hilfskraftmaschine als elektrischen Generator betreibt, sobald die Drehzahl an der Abtriebswelle der Verbrennungskraftmaschine lastwechselbedingt ansteigt.

Gemäß der Ausgestaltung nach Anspruch 7 ist der weitere Leistungsverbraucher bzw. einer der weiteren Leistungsverbraucher ein Arbeitsaggregat der Arbeitsmaschine, das insbesondere gewählt ist aus der Gruppe umfassend linear angetriebene, insbesondere hydraulisch angetriebene, Arbeitsaggregate und rotatorisch angetriebene, insbesondere riemengetriebene, Arbeitsaggregate. Ein Beispiel für ein linear angetriebenes Arbeitsaggregat ist das Fronthubwerk eines Mähdreschers, das auch die Haspel und das Schneidwerk trägt. Ein Beispiel für ein rotatorisch angetriebenes Arbeitsaggregat ist die Fördereinrichtung, mit der das Schnittgut zum Dreschwerk gefördert wird. Auch die Dreschtrommel des Dreschwerks ist ein rotatorisch angetriebenes Arbeitsaggregat. Der andere Leistungsverbraucher wird wie gesagt von einem Fahrantrieb der Arbeitsmaschine, der eine Antriebsachse und/oder Antriebsräder umfassen kann, gebildet.

Gemäß der Ausgestaltung nach Anspruch 8 ist ferner vorgesehen, dass die Hilfskraftmaschine an einen Antriebsstrang des Energiebereitstellungssystems angekoppelt ist, der zum Ausleiten von Antriebsleistung der Verbrennungskraftmaschine an den mindestens einen weiteren Leistungsverbraucher konfiguriert ist. Der Antriebsstrang weist gemäß Anspruch 9 mindestens zwei, bevorzugt mindestens drei, Teilantriebsstränge auf, von denen ein erster Teilantriebsstrang zum Übertragen von Antriebsleistung der Verbrennungskraftmaschine an den Fahrantrieb konfiguriert ist und/oder ein zweiter Teilantriebsstrang zum Übertragen von Antriebsleistung der Verbrennungskraftmaschine an den mindestens einen weiteren Leistungsverbraucher konfiguriert ist und/oder ein dritter Teilantriebsstrang zum Austausch von Antriebsleistung zwischen der Verbrennungskraftmaschine und der Hilfskraftmaschine konfiguriert ist. "Austausch" meint, dass über den dritten Teilantriebsstrang entweder Antriebsleistung von der Verbrennungskraftmaschine an die Hilfskraftmaschine oder von der Hilfskraftmaschine an die Verbrennungskraftmaschine übertragen wird.

Ein vorteilhaftes erfindungsgemäßes Verfahren ergibt sich aus den kennzeichnenden Merkmalen des Anspruchs 10.

Im Folgenden wird die Erfindung anhand einer lediglich ein Ausführungsbeispiel darstellenden Zeichnung näher erläutert. In der Zeichnung zeigt
- Fig. 1: eine landwirtschaftliche Arbeitsmaschine gemäß der vorliegenden Erfindung während des Bearbeitens des Feldbestands,
- Fig. 2: einen beispielhaften Regelkreis zur Regelung der Arbeitsmaschine aus Fig. 1 und
- Fig. 3: ein beispielhaftes Ablaufdiagramm zur Regelung der Arbeitsmaschine aus Fig. 1.

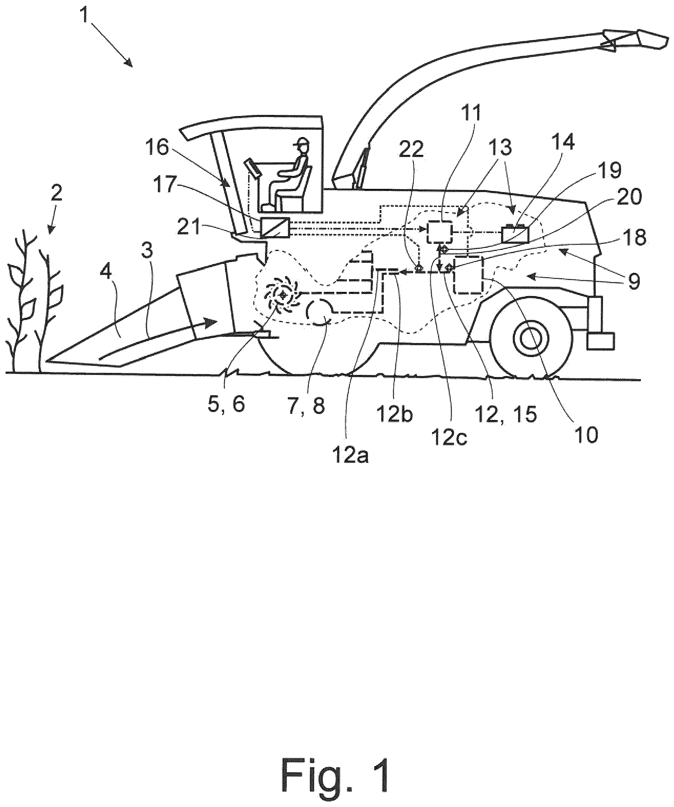

In Fig. 1 ist eine vorschlagsgemäße landwirtschaftliche Arbeitsmaschine 1 in Form eines Feldhäckslers dargestellt. Die hier und vorzugweise als selbstfahrende Erntemaschine ausgebildete Arbeitsmaschine 1 wird durch einen Feldbestand 2, beispielsweise ein Maisfeld, gefahren. Ein Gutfluss 3 aus Pflanzenteilen wird während des Betriebs durch einen Einzugskanal 4 eingezogen und zum Zwecke der weiteren Zerkleinerung zu einem Leistungsverbraucher 5, hier einem Arbeitsaggregat 6 in Form einer Häckslertrommel, geführt. Ein anderer Leistungsverbraucher 7 bildet einen Fahrantrieb 8 mit einer Antriebsachse für Antriebsräder (nicht dargestellt).

Außerdem verfügt die Arbeitsmaschine 1 über ein Energiebereitstellungssystem 9, das zum einen als Hauptmaschine eine Verbrennungskraftmaschine 10 in Form eines Dieselmotors und zum anderen eine elektrische Hilfskraftmaschine 11 in Form einer Elektromaschine aufweist. Das Energiebereitstellungssystem 9 dient sowohl zum Antrieb des Fahrantriebs 8 als auch, und zwar gleichzeitig, zum Antrieb verschiedener Arbeitsaggregate 6.

Dazu ist als Bestandteil des Energiebereitstellungssystems 9 ein von der Verbrennungskraftmaschine 10 ausgehender Antriebsstrang 12 vorgesehen, der dem Ausleiten von Antriebsleistung der Verbrennungskraftmaschine 10 an die Leistungsverbraucher 5 und 7 dient. Der Antriebsstrang 12 weist hier und vorzugweise drei Teilantriebsstränge 12a, 12b und 12c auf, in die sich dieser aufteilt. Die Hilfskraftmaschine 11 ist an den Antriebsstrang 12 angekoppelt, beispielsweise über ein Getriebe (nicht dargestellt).

Der erste Teilantriebsstrang 12a ist zum Übertragen von Antriebsleistung der Verbrennungskraftmaschine 10 an das mindestens eine Arbeitsaggregat 6 (z.B. Häckslertrommel) konfiguriert. Der zweite Teilantriebsstrang 12b ist zum Übertragen von Antriebsleistung der Verbrennungskraftmaschine 10 an den Fahrantrieb 8 konfiguriert. Der dritte Teilantriebsstrang 12c ist zum wechselseitigen Austausch von Antriebsleistung zwischen der Verbrennungskraftmaschine 10 und der Hilfskraftmaschine 11 konfiguriert.

Die Hilfskraftmaschine 11, die als Elektromaschine ausgebildet ist, ist Bestandteil eines Hybridsystems 13, das einen mit der Hilfskraftmaschine 11 elektrisch verbundenen Energiespeicher 14 aufweist. Die Hilfskraftmaschine 11 kann, wenn überschüssige Leistung von der Verbrennungskraftmaschine 10 zur Verfügung steht, als elektrischer Generator betrieben werden. Insbesondere kann die Hilfskraftmaschine 11 den Antriebsstrang 12 jedoch unterstützen, wenn aufgrund eines Anstiegs des Leistungsbedarfs des Arbeitsaggregats 6 die Drehzahl an der Abtriebswelle 15 der Verbrennungskraftmaschine 10 einzubrechen droht.

In Fig. 1 ist außerdem noch ein Fahrerassistenzsystem 16 mit einer Regeleinrichtung bzw. einem sogenannten Vorfahrtregler 17 dargestellt, die bzw. der konfiguriert ist, eine Regelung der Verbrennungskraftmaschine 10, der Hilfskraftmaschine 11 und des Fahrantriebs 8 durchzuführen, was im Folgenden noch näher beschrieben wird.

Die Regeleinrichtung 17 des Fahrerassistenzsystems 16 regelt den Fahrantrieb 8 unter Berücksichtigung der von dem Energiebereitstellungssystem 9 insgesamt abgebbaren Energie derart, dass die Drehzahl an der Abtriebswelle 15 der Verbrennungskraftmaschine 10 bei variierendem Leistungsbedarf des oder der Arbeitsaggregate 6 auf einem konstanten Wert oder in einem konstanten Wertebereich gehalten wird. Dabei regelt die Regeleinrichtung 17 den Fahrantrieb 8 insbesondere auf eine maximale Fahrgeschwindigkeit der Arbeitsmaschine 1.

Die Regelung erfolgt abhängig von der Auslastung des gesamten Energiebereitstellungssystems 9, wobei die Regeleinrichtung 17 die Regelung des Fahrantriebs 8 speziell unter Berücksichtigung des Ladezustands des elektrischen Energiespeichers 14 durchführt.

Dies hat folgenden Effekt: Da durch die Hilfskraftmaschine 11 auch bei einem ansteigenden Leistungsbedarf der Arbeitsaggregate 6 eine gleichbleibende Auslastung der Verbrennungskraftmaschine 10 erreicht wird, kann das Fahrerassistenzsystem 16, beispielsweise über einen Drehzahl- und/oder Drehmomentsensor 18 an der Abtriebswelle 15, daher keine Änderungen der abgegebenen Leistung der Verbrennungskraftmaschine 10 ermitteln, wohl aber Änderungen der abgegebenen Leistung des gesamten Energiebereitstellungssystems 9 und insbesondere Änderungen des Ladezustands des Energiespeichers 14. So wird ein Anstieg der abgegebenen Leistung der Hilfskraftmaschine 11 hier und vorzugsweise über die Erfassung des Ladezustands des Energiespeichers 14 ermittelt. Zusätzlich oder alternativ kann ein Anstieg der abgegebenen Leistung der Hilfskraftmaschine 11 auch mittels mindestens eines Drehzahl- und/oder Drehmomentsensors 19 an einer Abtriebswelle 20 der Hilfskraftmaschine 11 ermittelt werden. Sobald das Fahrerassistenzsystem 16 eine Verringerung des Ladezustands des Energiespeichers 14 um einen bestimmten Wert ermittelt, also insbesondere ein Sollwert für den Ladezustand unterschritten wird, wird die Fahrgeschwindigkeit der Arbeitsmaschine 1 verringert. Dabei wird die Fahrgeschwindigkeit insbesondere soweit abgesenkt, dass genügend Leistungsreserven zur Verfügung stehen, um den Energiespeicher 14 wieder zumindest teilweise aufladen zu können, so dass also rechtzeitig einer vollständigen Entleerung des Energiespeichers entgegengewirkt wird. Auch umgekehrt wird ermöglicht, dass wenn das Fahrerassistenzsystem 16 eine Erhöhung des Ladezustands des Energiespeichers 14 um einen bestimmten Wert ermittelt, also insbesondere ein weiterer Sollwert für den Ladezustand überschritten wird, die Fahrgeschwindigkeit der Arbeitsmaschine 1 zur Effizienzsteigerung wieder erhöht wird.

Die Drehzahl an der Abtriebswelle 15 der Verbrennungskraftmaschine 10 wird vorschlagsgemäß trotz variierendem Leistungsbedarf des mindestens einen Arbeitsaggregats 6 auf einem konstanten Wert gehalten, wodurch der Kraftstoffverbrauch optimiert und Schadstoffemissionen verringert werden können. Eine separate, von dem Vorfahrtregler 17 des Fahrerassistenzsystems 16 unabhängige Regeleinrichtung 21 regelt daher die Hilfskraftmaschine 11 so, dass sie einer lastwechselbedingten Änderung der Drehzahl an der Abtriebswelle 15 der Verbrennungskraftmaschine 10 entgegenwirkt. Eine solche Änderung der Drehzahl an der Abtriebswelle 15 der Verbrennungskraftmaschine 10 wird dabei insbesondere von einem Drehzahlsensor 22 erfasst, der an der Abtriebswelle 15 positioniert ist. Besonders bevorzugt ist die weitere Regeleinrichtung 21 derart konfiguriert, dass sie die Hilfskraftmaschine 11 als elektrischen Generator betreibt, sobald die Drehzahl an der Abtriebswelle 15 der Verbrennungskraftmaschine 10 lastwechselbedingt ansteigt.

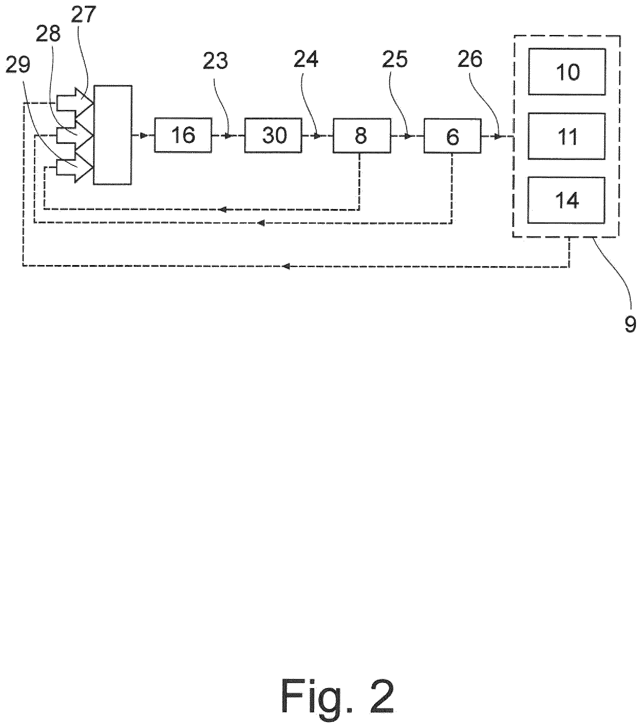

In dem in Fig. 2 beispielhaft dargestellten Regelkreis ist der Zusammenhang zwischen verschiedenen Stellgrößen 23-26 und Führungsgrößen 27-29 dargestellt, die zusammen die Regelung der landwirtschaftlichen Arbeitsmaschine 1 charakterisieren.

So übermittelt das Fahrerassistenzsystem 16 einen bestimmten Stellwert für die Soll-Fahrgeschwindigkeit als Stellgröße 23 an ein Fahrantriebsmodul 30 (der Übersichtlichkeit halber in Fig. 1 nicht dargestellt). Auf Basis des Stellwerts für die Stellgröße "Soll-Fahrgeschwindigkeit" bestimmt das Fahrantriebsmodul 30 einen Stellwert für eine Stellgröße 24 für den Fahrantrieb 8 und übermittelt diesen Stellwert an den Fahrantrieb 8. Auf Basis des Stellwerts für die Stellgröße "Fahrantrieb" bestimmt der Fahrantrieb 8 eine Fahrgeschwindigkeit der Arbeitsmaschine 1, die wiederum eine Stellgröße 25 für das mindestens eine Arbeitsaggregat 6 darstellt, da die Fahrgeschwindigkeit die Belastung des mindestens einen Arbeitsaggregats 6 mitbestimmt. Die Belastung (das Lastmoment) bildet dann eine Stellgröße 26 für das Energiebereitstellungssystem 9, das die Verbrennungskraftmaschine 10, die Hilfskraftmaschine 11 und den Energiespeicher 14 umfasst.

Auf Basis der Stellgröße "Lastmoment" wird dann das Energiebereitstellungssystem 9 in einer bestimmten Höhe ausgelastet, wobei die momentane Auslastung (Ist-Auslastung) des Energiebereitstellungssystems 9 eine Führungsgröße 27 bildet, die mit einem Sollwert für die Auslastung verglichen wird. Eine weitere Führungsgröße 28 ist die Summe der von der Arbeit des mindestens einen Arbeitsaggregats 6 verursachten momentanen Leistungsverluste (Ist-Verluste), die mit einem Sollwert für die Verluste verglichen wird. Noch eine weitere Führungsgröße 29 ist die momentane Durchsatzmenge (Ist-Durchsatz), die auf der vom Fahrantrieb 8 bestimmten Fahrgeschwindigkeit basiert und mit einem Sollwert für den Durchsatz verglichen wird. Das Vergleichsergebnis der einzelnen Istwerte mit den jeweiligen Sollwerten wird dann schließlich vom Fahrerassistenzsystem 16 berücksichtigt, um den Stellwert für die Soll-Fahrgeschwindigkeit als Stellgröße 23 zu erhalten.

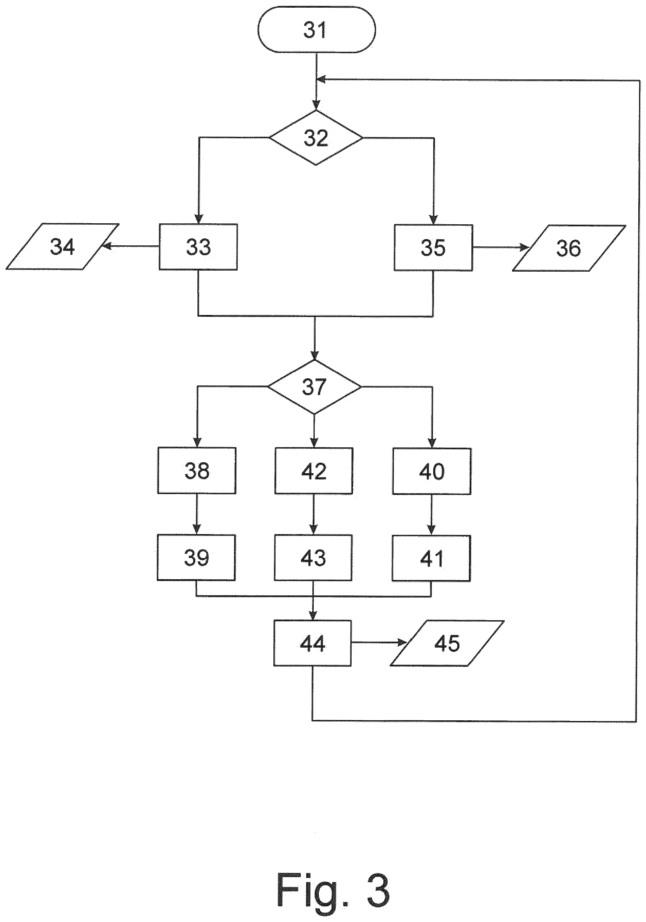

Fig. 3 zeigt schließlich ein Beispiel für ein Ablaufdiagramm zur Regelung der vorschlagsgemäßen Arbeitsmaschine 1.

Ein momentaner Leistungsbedarf der landwirtschaftlichen Arbeitsmaschine 1 liegt am Energiebereitstellungssystem 9 an (Pos. 31).

Es wird zunächst geprüft, ob dieser kleiner oder größer als die maximale Dauerleistung (Nennleistung) der Verbrennungskraftmaschine ist (Pos. 32).

Wenn der momentane Leistungsbedarf kleiner als die maximale Dauerleistung ist, wird die Leistung der Hilfskraftmaschine 11 so eingestellt, dass die Verbrennungskraftmaschine hier beispielhaft mit ihrer maximalen Auslastung betrieben wird (Pos. 33). Die Hilfskraftmaschine 11 wird dann als Generator betrieben und die überschüssige Leistung wird dazu verwendet, den elektrischen Energiespeicher 14 aufzuladen (Pos. 34). Andernfalls, wenn der momentane Leistungsbedarf größer als die maximale Dauerleistung ist, wird die Leistung der Hilfskraftmaschine 11 so eingestellt, dass die Verbrennungskraftmaschine von der Hilfskraftmaschine unterstützt wird (Pos. 35). Die von der Hilfskraftmaschine abgegebene Leistung bewirkt, dass der elektrische Energiespeicher 14 entladen wird (Pos. 36).

Nachdem die Leistung der Hilfskraftmaschine 11 wie zuvor beschrieben eingestellt ist, wird der Ladezustand des Energiespeichers 14 geprüft (Pos. 37).

Liegt dieser unter einem ersten Sollwert, beispielsweise unter 40%, wird der Sollwert für die Auslastung des Energiebereitstellungssystems 9 verringert (Pos. 38). Das Fahrerassistenzsystem 16 regelt dann eine geringere Last ein, indem es die Fahrgeschwindigkeit der Arbeitsmaschine 1 verringert (Pos. 39), wodurch auch der Durchsatz verringert wird (Pos. 44). Der verringerte Durchsatz führt dann zu einer geringeren Prozesslast (Pos. 45) und damit zu einem geringeren momentanen Leistungsbedarf der Arbeitsmaschine 1 (Pos. 31). Liegt der Ladezustand des Energiespeichers 14 dagegen über einem zweiten Sollwert, beispielsweise über 60%, wird der Sollwert für die Auslastung des Energiebereitstellungssystems 9 erhöht (Pos. 40). Das Fahrerassistenzsystem 16 regelt dann eine höhere Last ein, indem es die Fahrgeschwindigkeit der Arbeitsmaschine 1 erhöht (Pos. 41), wodurch auch der Durchsatz erhöht wird (Pos. 44). Der erhöhte Durchsatz führt dann zu einer erhöhten Prozesslast (Pos. 45) und damit zu einem vergrößerten momentanen Leistungsbedarf der Arbeitsmaschine 1 (Pos. 31). Liegt der Ladezustand des Energiespeichers 14 zwischen dem ersten und dem zweiten Sollwert, beispielsweise zwischen 40% und 60%, wird der Sollwert für die Auslastung des Energiebereitstellungssystems 9 nicht geändert (Pos. 42). Das Fahrerassistenzsystem 16 ändern dann auch die Fahrgeschwindigkeit der Arbeitsmaschine 1 nicht (Pos. 43). Entsprechend ändert sich auch der Durchsatz nicht (Pos. 44) und die Prozesslast (Pos. 45) und der momentane Leistungsbedarf der Arbeitsmaschine 1 (Pos. 31) bleiben im Wesentlichen konstant.

Die zuvor genannten Werte für den ersten (unteren) Sollwert und den zweiten (oberen) Sollwert sind nur Beispiele. Grundsätzlich kann bei der vorschlagsgemäßen Arbeitsmaschine 1 der erste Sollwert in einem Bereich von 10 bis 50%, bevorzugt in einem Bereich von 20 bis 45% und besonders bevorzugt in einem Bereich von 30 bis 40% liegen. Der zweite Sollwert kann in einem Bereich von 50 bis 90%, bevorzugt in einem Bereich von 55 bis 80% und besonders bevorzugt in einem Bereich von 60 bis 70% liegen.

### Bezugszeichen

- 1: landwirtschaftliche Arbeitsmaschine
- 2: Feldbestand
- 3: Gutfluss
- 4: Einzugskanal
- 5: Leistungsverbraucher
- 6: Arbeitsaggregat
- 7: Leistungsverbraucher
- 8: Fahrantrieb
- 9: Energiebereitstellungssystem
- 10: Verbrennungskraftmaschine
- 11: elektrische Hilfskraftmaschine
- 12: Antriebsstrang
- 12a: erster Teilantriebsstrang
- 12b: zweiter Teilantriebsstrang
- 12c: dritter Teilantriebsstrang
- 13: Hybridsystem
- 14: elektrischer Energiespeicher
- 15: Abtriebswelle der Verbrennungskraftmaschine
- 16: Fahrerassistenzsystem
- 17: Regeleinrichtung des Fahrerassistenzsystems (Vorfahrtregler)
- 18: Drehzahl- und/oder Drehmomentsensor
- 19: Drehzahl- und/oder Drehmomentsensor
- 20: Abtriebswelle der Hilfskraftmaschine
- 21: weitere Regeleinrichtung
- 22: Drehzahlsensor
- 23-26: Stellgrößen
- 27-29: Führungsgrößen
- 30: Fahrantriebsmodul
- 31-45: Elemente des Ablaufdiagramms

## Patentansprüche

1. Landwirtschaftliche Arbeitsmaschine, insbesondere Erntemaschine, wobei ein Energiebereitstellungssystem (9) mit einer Verbrennungskraftmaschine (10), einer elektrischen Hilfskraftmaschine (11) und einem elektrischen Energiespeicher (14) vorgesehen ist, wobei ein Leistungsverbraucher (7) in Form eines Fahrantriebs (8) und mindestens ein weiterer Leistungsverbraucher (5) vorgesehen sind, wobei die Leistungsverbraucher (5, 7) von dem Energiebereitstellungssystem (9) antreibbar sind, und wobei ein Fahrerassistenzsystem (16) mit einer Regeleinrichtung (17) vorgesehen ist, die konfiguriert ist, eine Regelung der Verbrennungskraftmaschine (10), der Hilfskraftmaschine (11) und des Fahrantriebs (8) durchzuführen, wobei die Regeleinrichtung (17) des Fahrerassistenzsystems (16) den Fahrantrieb (8) unter Berücksichtigung der von dem Energiebereitstellungssystem (9) insgesamt abgebbaren Energie derart regelt, dass die Drehzahl an einer Abtriebswelle (15) der Verbrennungskraftmaschine (10) bei variierendem Leistungsbedarf des mindestens einen weiteren Leistungsverbrauchers (5) auf einem konstanten Wert oder in einem konstanten Wertebereich gehalten wird, wobei die Regeleinrichtung des Fahrerassistenzsystems die Regelung des Fahrantriebs unter Berücksichtigung des Ladezustands des elektrischen Energiespeichers durchführt,
**dadurch gekennzeichnet,**
**dass** die Regeleinrichtung (17) des Fahrerassistenzsystems (16) den Fahrantrieb (8) auf eine maximale Fahrgeschwindigkeit der Arbeitsmaschine (1) regelt.

2. Landwirtschaftliche Arbeitsmaschine nach einem der vorhergehenden Ansprüche, **dadurch gekennzeichnet, dass** mittels mindestens eines Drehzahl- und/oder Drehmomentsensors (19), der an einer Abtriebswelle (20) der Hilfskraftmaschine (11) angeordnet ist, ein Anstieg der abgegebenen Leistung der Hilfskraftmaschine (11) ermittelbar ist.

3. Landwirtschaftliche Arbeitsmaschine nach einem der vorhergehenden Ansprüche, **dadurch gekennzeichnet, dass** über die Erfassung des Ladezustands des Energiespeichers (14) ein Anstieg der abgegebenen Leistung der Hilfskraftmaschine (11) ermittelbar ist.

4. Landwirtschaftliche Arbeitsmaschine nach einem der vorhergehenden Ansprüche, **dadurch gekennzeichnet, dass** die Regeleinrichtung (17) des Fahrerassistenzsystems (16) die Fahrgeschwindigkeit der Arbeitsmaschine (1) verringert, sobald der Ladezustand des Energiespeichers (14) einen ersten Sollwert unterschreitet, und/oder die Fahrgeschwindigkeit der Arbeitsmaschine (1) erhöht, sobald der Ladezustand des Energiespeichers (14) einen zweiten Sollwert überschreitet.

5. Landwirtschaftliche Arbeitsmaschine nach einem der vorhergehenden Ansprüche, **dadurch gekennzeichnet, dass** eine weitere Regeleinrichtung (21), die von der Regeleinrichtung (17) des Fahrerassistenzsystems (16) unabhängig ist, oder die Regeleinrichtung (17) des Fahrerassistenzsystems (16) die Hilfskraftmaschine (11) so regelt, dass die Hilfskraftmaschine (11) einer lastwechselbedingten Änderung der Drehzahl an der Abtriebswelle (15) der Verbrennungskraftmaschine (10) entgegenwirkt.

6. Landwirtschaftliche Arbeitsmaschine nach einem der vorhergehenden Ansprüche, **dadurch gekennzeichnet, dass** die Hilfskraftmaschine (11) Bestandteil eines Hybridsystems (13) ist, wobei die Hilfskraftmaschine (11) als elektrischer Generator betreibbar ist und die Regeleinrichtung (17, 21) derart konfiguriert ist, dass sie die Hilfskraftmaschine (11) als elektrischen Generator betreibt, sobald die Drehzahl an der Abtriebswelle (15) der Verbrennungskraftmaschine (10) lastwechselbedingt ansteigt.

7. Landwirtschaftliche Arbeitsmaschine nach einem der vorhergehenden Ansprüche, **dadurch gekennzeichnet, dass** der weitere Leistungsverbraucher (5) bzw. einer der weiteren Leistungsverbraucher (5) ein Arbeitsaggregat (6) der Arbeitsmaschine (1) ist, das gewählt ist aus der Gruppe umfassend linear angetriebene Arbeitsaggregate (6) und rotatorisch angetriebene Arbeitsaggregate (6).

8. Landwirtschaftliche Arbeitsmaschine nach einem der vorhergehenden Ansprüche, **dadurch gekennzeichnet, dass** die Hilfskraftmaschine (11) an einen Antriebsstrang (12) des Energiebereitstellungssystems (9) angekoppelt ist, der zum Ausleiten von Antriebsleistung der Verbrennungskraftmaschine (10) an den mindestens einen weiteren Leistungsverbraucher (5) konfiguriert ist.

9. Landwirtschaftliche Arbeitsmaschine nach Anspruch 8, **dadurch gekennzeichnet, dass** der Antriebsstrang (12) mindestens zwei Teilantriebsstränge (12a, 12b, 12c) aufweist, von denen
- ein erster Teilantriebsstrang (12a) zum Übertragen von Antriebsleistung der Verbrennungskraftmaschine (10) an den Fahrantrieb (8) konfiguriert ist und/oder
- ein zweiter Teilantriebsstrang (12b) zum Übertragen von Antriebsleistung der Verbrennungskraftmaschine (10) an den mindestens einen weiteren Leistungsverbraucher (5) konfiguriert ist und/oder
- ein dritter Teilantriebsstrang (12c) zum Austausch von Antriebsleistung zwischen der Verbrennungskraftmaschine (10) und der Hilfskraftmaschine (11) konfiguriert ist.

10. Verfahren zum Betrieb einer landwirtschaftlichen Arbeitsmaschine, insbesondere einer landwirtschaftlichen Arbeitsmaschine (1) nach einem der vorhergehenden Ansprüche, wobei die Arbeitsmaschine (1) ein Energiebereitstellungssystem (9) mit einer Verbrennungskraftmaschine (10), einer elektrischen Hilfskraftmaschine (11) und einem elektrischen Energiespeicher (14) aufweist, wobei die Arbeitsmaschine (1) einen Leistungsverbraucher (7) in Form eines Fahrantriebs (8) und mindestens einen weiteren Leistungsverbraucher (5) aufweist, die von dem Energiebereitstellungssystem (9) antreibbar sind, und wobei die Arbeitsmaschine (1) ein Fahrerassistenzsystem (16) mit einer Regeleinrichtung (17) aufweist, die konfiguriert ist, eine Regelung der Verbrennungskraftmaschine (10), der Hilfskraftmaschine (11) und des Fahrantriebs (8) durchzuführen, wobei der Fahrantrieb (8) unter Berücksichtigung der vom Energiebereitstellungssystem (9) insgesamt abgebbaren Energie derart geregelt wird, dass die Drehzahl an einer Abtriebswelle (15) der Verbrennungskraftmaschine (10) bei variierendem Leistungsbedarf des mindestens einen weiteren Leistungsverbrauchers (5) auf einem konstanten Wert gehalten wird, wobei die Regeleinrichtung des Fahrerassistenzsystems die Regelung des Fahrantriebs unter Berücksichtigung des Ladezustands des elektrischen Energiespeichers durchführt, **dadurch gekennzeichnet,**
**dass** die Regeleinrichtung (17) des Fahrerassistenzsystems (16) den Fahrantrieb (8) auf eine maximale Fahrgeschwindigkeit der Arbeitsmaschine (1) regelt.

## Claims

1. An agricultural working machine, in particular a harvesting machine, wherein an energy provision system (9) is provided which has a combustion engine (10), an electric auxiliary engine (11) and an electrical energy storage device (14), wherein a power consumer (7) in the form of a power unit (8) and at least one further power consumer (5) are provided, wherein the power consumers (5, 7) can be driven by the energy provision system (9), and wherein a driver assistance system (16) with a control device (17) is provided which is configured to execute a control over the combustion engine (10), the auxiliary engine (11) and the power unit (8), wherein the control device (17) of the driver assistance system (16) controls the power unit (8) having regard to the total deliverable energy from the energy provision system (9) in a manner such that the speed of a take-off shaft (15) of the combustion engine (10) is kept to a constant value or in a constant range of values when the power requirement of the at least one further power consumer (5) varies, wherein the control device of the driver assistance system executes control over the power unit having regard to the charge state of the electrical energy storage device,
**characterized in that**
the control device (17) of the driver assistance system (16) adjusts the power unit (8) to a maximum drive speed of the working machine (1).

2. The agricultural working machine according to one of the preceding claims, **characterized in that** an increase in the power delivered by the auxiliary engine (11) can be determined by means of at least one speed sensor and/or torque sensor (19) which is disposed on an output shaft of the auxiliary engine (11).

3. The agricultural working machine according to one of the preceding claims, **characterized in that** an increase in the power delivered by the auxiliary engine (11) can be determined by means of a measurement of the charge state of the energy storage device (14).

4. The agricultural working machine according to one of the preceding claims, **characterized in that** the control device (17) of the driver assistance system (16) reduces the drive speed of the working machine (1) once the charge state of the energy storage device (14) drops below a first nominal value, and/or increases the drive speed of the working machine (1) once the charge state for the energy storage device (14) exceeds a second nominal value.

5. The agricultural working machine according to one of the preceding claims, **characterized in that** a further control device (21) which is independent of the control device (17) of the driver assistance system (16), or the control device (17) of the driver assistance system (16) controls the auxiliary engine (11) in a manner such that the auxiliary engine (11) counteracts a load change-contingent variation in the speed at the take-off shaft (15) of the combustion engine (10).

6. The agricultural working machine according to one of the preceding claims, **characterized in that** the auxiliary engine (11) is a component of a hybrid system (13), wherein the auxiliary engine (11) can be operated as an electrical generator and the control device (17, 21) is configured in a manner such that it operates the auxiliary engine (11) as an electrical generator once the speed at the take-off shaft (15) of the combustion engine (10) rises as a consequence of a change in the load.

7. The agricultural working machine according to one of the preceding claims, **characterized in that** the further power consumer (5) or one of the further power consumers (5) is a working assembly (6) of the working machine (1) which is selected from the group comprising linearly driven working assemblies (6) and rotatably driven working assemblies (6).

8. The agricultural working machine according to one of the preceding claims, **characterized in that** the auxiliary engine (11) is coupled to a drive train (12) of the energy provision system (9) which is configured to output drive power from the combustion engine (10) to the at least one further power consumer (5).

9. The agricultural working machine according to claim 8, **characterized in that** the drive train (12) comprises at least two sub-drive trains (12a, 12b, 12c), of which
- a first sub-drive train (12a) is configured to transmit drive power from the combustion engine (10) to the power unit (8), and/or
- a second sub-drive train (12b) is configured to transmit drive power from the combustion engine (10) to the at least one further power consumer (7), and/or
- a third sub-drive train (12c) is configured for exchanging drive power between the combustion engine (10) and the auxiliary engine (11).

10. A method for operating an agricultural working machine, in particular an agricultural working machine (1) according to one of the preceding claims, wherein the working machine (1) has an energy provision system (9) with a combustion engine (10), an electric auxiliary engine (11) and an electrical energy storage device (14), wherein the working machine (1) has a power consumer (7) in the form of a power unit (8) and at least one further power consumer (5) which can be driven by the energy provision system (9), and wherein the working machine (1) has a driver assistance system (16) with a control device (17) which is configured to execute control over the combustion engine (10), the auxiliary engine (11) and the power unit (8), wherein, having regard to the total energy which can be delivered by the energy provision system (9), the power unit (8) is controlled in a manner such that the speed of a take-off shaft (15) of the combustion engine (10) is kept to a constant value when the power requirement for the at least one further power consumer (5) varies, wherein the control device of the driver assistance system executes the control over the power unit having regard to the charge state of the electrical energy storage device, **characterized in that**
the control device (17) of the driver assistance system (16) adjusts the power unit (8) to a maximum drive speed of the working machine (1).

## Revendications

1. Machine de travail agricole, en particulier machine de récolte, un système de fourniture d'énergie (9) avec une machine motrice à combustion (10), une machine motrice auxiliaire électrique (11) et un accumulateur d'énergie électrique (14) étant prévu, un consommateur de puissance (7) en forme de transmission (8) et au moins un consommateur de puissance supplémentaire (5) étant prévus, les consommateurs de puissance (5, 7) étant entraînables par le système de fourniture d'énergie (9), et un système d'assistance à la conduite (16) avec un équipement de régulation (17) étant prévu, lequel est configuré pour réaliser une régulation de la machine motrice à combustion (10), de la machine motrice auxiliaire (11) et de la transmission (8), l'équipement de régulation (17) du système d'assistance à la conduite (16) régulant la transmission (8) en tenant compte de l'énergie délivrable au total par le système de fourniture d'énergie (9), de façon que, en cas de besoin de puissance variable du au moins un consommateur de puissance supplémentaire (5), la vitesse de rotation au niveau d'un arbre de sortie (15) de la machine motrice à combustion (10) soit maintenue à une valeur constante ou dans une plage de valeurs constante, l'équipement de régulation du système d'assistance à la conduite réalisant la régulation de la transmission en tenant compte de l'état de charge de l'accumulateur d'énergie, **caractérisée en ce que** l'équipement de régulation (17) du système d'assistance à la conduite (16) régule la transmission (8) à une vitesse de marche maximale de la machine de travail (1).

2. Machine de travail agricole selon une des revendications précédentes, **caractérisée en ce qu'**une augmentation de la puissance délivrée de la machine motrice auxiliaire (11) est déterminable au moyen d'au moins un capteur de vitesse de rotation et/ou de couple de rotation (19) qui est disposé sur un arbre de sortie (20) de la machine motrice auxiliaire (11).

3. Machine de travail agricole selon une des revendications précédentes, **caractérisée en ce qu'**une augmentation de la puissance délivrée de la machine motrice auxiliaire (11) est déterminable par l'intermédiaire de la détection de l'état de charge de l'accumulateur d'énergie (14).

4. Machine de travail agricole selon une des revendications précédentes, **caractérisée en ce qu** l'équipement de régulation (17) du système d'assistance à la conduite (16) diminue la vitesse de marche de la machine de travail (1) dès que l'état de charge de l'accumulateur d'énergie (14) excède une première valeur de consigne, et/ou augmente la vitesse de marche de la machine de travail (1) dès que l'état de charge de l'accumulateur d'énergie (14) excède une seconde valeur de consigne.

5. Machine de travail agricole selon une des revendications précédentes, **caractérisée en ce qu'**un équipement de régulation supplémentaire (21), qui est indépendant de l'équipement de régulation (17) du système d'assistance à la conduite (16), ou l'équipement de régulation (17) du système d'assistance à la conduite (16) régule la machine motrice auxiliaire (11), de façon que la machine motrice auxiliaire (11) agisse à l'encontre d'une variation, due à une alternance de charge, de la vitesse de rotation au niveau de l'arbre de sortie (15) de la machine motrice à combustion (10).

6. Machine de travail agricole selon une des revendications précédentes, **caractérisée en ce que** la machine motrice auxiliaire (11) fait partie intégrante d'un système hybride (13), la machine motrice auxiliaire (11) étant exploitable en tant que générateur électrique, et l'équipement de régulation (17, 21) étant configuré de façon à exploiter la machine motrice auxiliaire (11) en tant que générateur électrique dès que la vitesse de rotation au niveau de l'arbre de sortie (15) de la machine motrice à combustion (10) augmente en raison de l'alternance de charge.

7. Machine de travail agricole selon une des revendications précédentes, **caractérisée en ce que** le consommateur de puissance supplémentaire (5), respectivement un des consommateurs de puissance supplémentaires (5) est un organe de travail (6) de la machine de travail (1), lequel est choisi dans le groupe incluant des organes de travail à entraînement linéaire (6) et des organes de travail à entraînement rotatif (6).

8. Machine de travail agricole selon une des revendications précédentes, **caractérisée en ce que** la machine motrice auxiliaire (11) est couplée à une chaîne de transmission (12) du système de fourniture d'énergie (9), laquelle est configurée pour transmettre de la puissance d'entraînement de la machine motrice à combustion (10) au au moins un consommateur de puissance supplémentaire (5).

9. Machine de travail agricole selon la revendication 8, **caractérisée en ce que** la chaîne de transmission (12) comprend au moins deux chaînes de transmission partielles (12a, 12b, 12c) dont
- une première chaîne de transmission partielle (12a) est configurée pour transmettre de la puissance d'entraînement de la machine motrice à combustion (10) à la transmission (8) et/ou
- une deuxième chaîne de transmission partielle (12b) est configurée pour transmettre de la puissance d'entraînement de la machine motrice à combustion (10) au au moins un consommateur de puissance supplémentaire (5) et/ou
- une troisième chaîne de transmission partielle (12c) est configurée pour échanger de la puissance d'entraînement entre la machine motrice à combustion (10) et la machine motrice auxiliaire (11).

10. Procédé de fonctionnement d'une machine de travail agricole, en particulier une machine de travail agricole (1) selon une des revendications précédentes, la machine de travail (1) comportant un système de fourniture d'énergie (9) avec une machine motrice à combustion (10), une machine motrice auxiliaire électrique (11) et un accumulateur d'énergie électrique (14), la machine de travail (1) comportant un consommateur de puissance (7) en forme de transmission (8) et au moins un consommateur de puissance supplémentaire (5), lesquels sont entraînables par le système de fourniture d'énergie (9), et la machine de travail (1) comportant un système d'assistance à la conduite (16) avec un équipement de régulation (17) qui est configuré pour réaliser une régulation de la machine motrice à combustion (10), de la machine motrice auxiliaire (11) et de la transmission (8), la transmission (8) étant régulée en tenant compte de l'énergie délivrable au total par le système de fourniture d'énergie (9), de façon que, en cas de besoin de puissance variable du au moins un consommateur de puissance supplémentaire (5), la vitesse de rotation au niveau d'un arbre de sortie (15) de la machine motrice à combustion (10) soit maintenue à une valeur constante, l'équipement de régulation du système d'assistance à la conduite réalisant la régulation de la transmission en tenant compte de l'état de charge de l'accumulateur d'énergie, **caractérisé en ce que** l'équipement de régulation (17) du système d'assistance à la conduite (16) régule la transmission (8) à une vitesse de marche maximale de la machine de travail (1).
